# EUROPÄISCHE PATENTSCHRIFT

(11) **EP 1 159 324 B1**
(45) Veröffentlichungstag und Bekanntmachung des Hinweises auf die Patenterteilung: **29.10.2003**
(21) Anmeldenummer: 99973299.3
(22) Anmeldetag: 24.11.1999
(51) Int. Cl.: C08G 18/08, C08G 18/12, C08G 18/28, C08G 18/80, D06M 15/564

(54) **KOAGULATE WÄSSRIGER PUR-DISPERSIONEN UND DEREN VERWENDUNG**
COAGULATED PRODUCTS OF AQUEOUS PUR DISPERSIONS AND THEIR USE
PRODUITS COAGULES DE DISPERSIONS DE POLYURETHANNE (PUR) AQUEUSES ET LEUR UTILISATION

(30) Priorität: 07.12.1998 DE 19856412; 10.12.1998 DE 19856968
(43) Veröffentlichungstag der Anmeldung: 05.12.2001
(73) Patentinhaber: Bayer Aktiengesellschaft, 51368 Leverkusen (DE)
(72) Erfinder: LANGEL, Rolf, D-51381 Leverkusen (DE); SCHÜTZE, Detlef-Ingo, D-51061 Köln (DE); BÄLZ, Werner, D-51467 Bergisch Gladbach (DE); KÖNIG, Eberhard, D-51375 Leverkusen (DE)
(86) Internationale Anmeldenummer: EP9909068
(87) Internationale Veröffentlichungsnummer: WO00034352

(56) Entgegenhaltungen:
- EP-A- 0 684 286
- EP-A- 0 916 647
- DE-A- 4 218 184
- DE-A- 19 750 186
- US-A- 3 791 849
- US-A- 4 888 379

## Beschreibung

Die Erfindung betrifft Koagulate von PUR-Dispersionen und deren Verwendung.

Als PUR-Dispersionen zur Herstellung der erfindungsgemäßen Koagulate eignen sich reaktive oder nachvernetzbare PUR-Dispersionen. Erfindungsgemäß werden Filme erzeugt und verschiedenste Materialien beschichtet, Vliese, Gewirke oder andere Flächengebilde zwecks Verfestigung teilweise bzw. vollständig getränkt.

Die erfindungsgemäß hergestellten Koagulate sind geeignet zur Anwendung beispielsweise in den Bereichen Bekleidung, Schutzbekleidung, Schuhobermaterial und - futter, Schutzhandschuhen, Täschner- und Polstermaterial, Beschichtung von Metallen, Medizin.- und Hygiene-Artikeln etc.

Seit langem ist die Herstellung von beschichteten textilen Flächengebilden, wie z.B. Kunstleder, bekannt. Das Beschichtungsmittel wird ein- oder mehrschichtig im Direktstreichverfahren oder nach dem Transferverfahren auf das Substrat aufgebracht. Die beschichteten textilen Flächengebilde lassen sich für die Herstellung von Oberbekleidung, Schuhobermaterial und -futter, Täschner- und Polstermaterial etc. einsetzen.

Auch die Herstellung von beispielsweise Handschuhen mit Latex-Dispersionen oder, in jüngster Zeit wegen der auftretenden Latex-Allergien, mit Polyurethan-Dispersionen ist bekannt, wobei insbesondere die Verwendung der Polyurethan-Dispersionen zur Koagulation größere technische Probleme bereitet.

Flexibilität, Zugfestigkeit und Weichheit spielen u. a. bezüglich des angestrebten Komforts bei der Herstellung von qualitativ hochwertigen, beschichteten textilen Flächengebilden eine entscheidende Rolle, da steife Flächengebilde mangelnden Komfort aufweisen.

Wird bei der Herstellung von flexiblen beschichteten textilen Flächengebilden eine Verklebung von Faserkreuzungspunkten nicht vermieden, geht die Flexibilität verloren und die Gefahr besteht, dass der Verbund zwischen Textilfasern und Binder bei Biegebeanspruchung zerstört wird.

Das unerwünschte Verkleben von Faserbündeln und Fadenkreuzungspunkten kann dadurch vermieden werden, dass man das textile Flächengebilde z.B. mit wässrigen Dispersionen organischer Bindemittel behandelt und diese dann koaguliert. Auf diese Weise erreicht man erhöhte Zugfestigkeit und größere Weichheit der beschichteten textilen Flächengebilde.

Folgende Koagulationsmethoden sind bekannt:
- die Badkoagulation, bei der das Substrat mit einem in einem organischen Lösungsmittel (z.B. DMF, DMAC, DMSO, THF) gelösten Bindemittel beschichtet und das so erhaltene Produkt durch ein Bad aus einem mit dem Lösungsmittel mischbaren Nichtlöser (z.B. Wasser) führt; aufgrund der Extraktion des Lösungsmittels durch den Nichtlöser erfolgt die Koagulation. Nachteile dieses Verfahrens bestehen insbesondere in den notwendigen und aufwendigen Maßnahmen zur sicheren Handhabung, zur Aufbereitung und Wiederverwertung der sehr großen Lösemittelmengen.
- die Verdampfungskoagulation, die auf der Verwendung eines flüchtigen Lösemittels und eines weniger flüchtigen Nichtlösers für das Bindemittel beruht; zunächst entweicht bei schonendem Erwärmen bevorzugt das Lösungsmittel, so dass der Binder durch den stetig steigenden Anteil an Nichtlöser koaguliert; nachteilig erweist sich neben dem ebenfalls notwendigen Einsatz großer Lösemittelmengen, der erforderliche enorme technische Aufwand und die durch die Prozeßpararneter sehr eingeschränkten Optimierungsmöglichkeiten.
- die Salz-, Säure- oder Elektrolyt-Koagulation erfolgt durch Eintauchen des beschichteten Substrats oder, wie im Falle von Handschuhen, der zunächst in die Dispersion getauchten Form, in eine konzentrierte Salzlösung oder in mit Säure versetztes Wasser o. ä., wobei das Bindemittel durch den hohen Elektrolytgehalt koaguliert; Nachteile dieses Verfahrens bestehen in der komplizierten technischen Durchführung und vor allem durch den hohen Anfall belasteter Abwässer.
- die Prepolymerisatmethode, wonach ein Isocyanat-Prepolymerisat-beschichtetes Substrat in Wasser getaucht wird und dann unter CO₂-Abspaltung ein Polyharnstoff in poriger Struktur anfällt. Nachteilig erweist sich u.a. die sehr hohe Reaktivität der Formulierungen und die damit verbundenen kurzen Verarbeitungszeiten; und
- die für wärmesensibel eingestellten nicht nachvernetzbarer Bindemittel mögliche Koagulation durch Temperaturerhöhung, die oft zu nicht akzeptablen Ergebnissen führt.

Zusammengefaßt erfordern die genannten Methoden entweder lange Zeiten bis zur vollständigen Entfernung von Lösemitteln, einen erheblichen Aufwand zur Trennung und Rückgewinnung von Lösemitteln und Nichtlöser, die Beseitigung von Säureoder Salzfracht-beladenen Abwässern oder aber sie führen nicht in jedem Fall zu qualitativ akzeptablen Ergebnissen.

Die Aufgabe der Erfindung bestand nun darin, neue Koagulate aus wässrigen Produkten bereitzustellen, die zur Koagulation geeignet sind ohne dass die geschilderten Nachteile vorliegen. Danach soll es möglich sein, mit Hilfe einer wässrigen Dispersion ohne oder nur mit einem geringen Gehalt an organischen Lösemitteln und ohne Verwendung von Salz-, Säure- o. a. Elektrolytbädern in einem einfachen Prozeß zu Produkten von hoher Qualität zu gelangen.

Überraschend wurde gefunden, dass sich die erfindungsgemäßen Koagulate durch Einsatz von wässrigen, nachvernetzbaren Polyurethan-Dispersionen herstellen lassen.

Die Verwendung des Begriffs "Polyurethan" schließt auch Polyurethan-Polyharnstoff mit ein.

Gegenstand der Erfindung sind daher Koagulate nachvernetzbarer Dispersionen, die dadurch erhältlich sind, dass nachvernetzbare Dispersionen durch thermische Behandlung bei 50 bis 120°C unter Bildung eines stabilen, mindestens teilweise vernetzten Polyurethans bzw. Gels ausgefällt werden.

Vorzugsweise wird die Koagulation bei 75 bis 98°C ausgeführt.

Die erfindungsgemäßen Koagulate nachvemetzbarer PUR-Dispersionen sind dadurch gekennzeichnet, dass die zugrundeliegenden nachvernetzbaren Dispersionen einen Gehalt an
a) blockierten Isocyanatgruppen (berechnet als NCO = 42) von 0,1 bis 7,5 Gew.-%, vorzugsweise 0,9 bis 2,0 Gew.-%, und
b) einem Gehalt an mindestens einem Polyamin mit mindestens zwei (cyclo)-aliphatisch gebundenen primären und/oder sekundären Aminogruppen und/oder Hydroxyamin, wobei das Äquivalentverhältnis blockierter Isocyanatgruppen aus a) zu Aminogruppen aus b) 1:0,5 bis 1:1,5, vorzugsweise 1:0,7 bis 1:1,2, besonders bevorzugt 1:0,9 bis 1:1,1 beträgt, aufweisen,
und durch thermische Behandlung bei 50 bis 120°C, vorzugsweise 75 bis 98°C, unter Bildung eines stabilen, mindestens teilweise vernetzten Polyurethans bzw. Gels ausgefällt werden.

Zur Herstellung der erfindungsgemäßen Koagulate nachvernetzbarer Dispersionen werden nachvernetzbare Dispersionen durch thermische Behandlung bei 50 bis 120°C unter Bildung eines stabilen, mindestens teilweise vernetzten Polyurethans bzw. Gels ausgefällt, dadurch gekennzeichnet, dass die verwendeten Dispersionen
a) einen Gehalt an blockierten Isocyanatgruppen (berechnet als NCO = 42) von 0,1 bis 7,5 Gew.% und
b) einen Gehalt an mindestens einem Polyamin und/oder Hydroxyamin mit mindestens zwei (cyclo)aliphatisch gebundenen primären und/oder sekundären Aminogruppen, wobei das Äquivalentverhältnis blockierter Isocyanatgruppen aus a) zu Aminogruppen aus b) 1 : 0,5 bis 1 : 1,5 aufweisen,
vorzugsweise nachvernetzbare Dispersionen durch thermische Behandlung bei 75 bis 98°C unter Bildung eines stabilen, mindestens teilweise vernetzten Polyurethans bzw. Gels ausgefällt werden, dadurch gekennzeichnet, dass die verwendeten Dispersionen
a) einen Gehalt an blockierten Isocyanatgruppen (berechnet als NCO = 42) von 0,25 bis 5 Gew.% und
b) einen Gehalt an mindestens einem Polyamin und/oder Hydroxyamin mit mindestens zwei (cyclo)aliphatisch gebundenen primären und/oder sekundären Aminogruppen, wobei das Äquivalentverhältnis blockierter Isocyanatgruppen aus a) zu Aminogruppen aus b) 1 : 0,7 bis 1 : 1,2 aufweisen,
besonders bevorzugt, dadurch gekennzeichnet, dass nachvernetzbare PUR-Dispersionen durch thermische Behandlung bei 75 bis 98°C unter Bildung eines stabilen, mindestens teilweise vernetzten Polyurethans bzw. Gels ausgefällt werden, des weiteren dadurch gekennzeichnet, dass die verwendeten Dispersionen
a) einen Gehalt an blockierten Isocyanatgruppen (berechnet als NCO = 42) von 0,7 bis 2 Gew.% und
b) einen Gehalt an mindestens einem Polyamin und/oder Hydroxyamin mit mindestens zwei (cyclo)aliphatisch gebundenen primären und/oder sekundären Aminogruppen, wobei das Äquivalentverhältnis blockierter Isocyanatgruppen aus a) zu Aminogruppen aus b) 1 : 0,9 bis 1 : 1,1 beträgt.

In einer bevorzugten Variante werden Dispersionen auf Basis hydrophiler Rohstoffe, insbesondere hydrophile Polyole eingesetzt, und dadurch wasserdampfdurchlässige Koagulate gebildet.

Die zur Herstellung der erfindungsgemäßen Koagulate eingesetzten koagulierbaren, nachvernetzbaren Polyurethane, welche in Form von wässrigen Dispersionen bzw. Emulsionen vorliegen, sind Umsetzungsprodukte von
1) mindestens einem organischen Di- bzw. Polyisocyanat,
2) mindestens einer Polyhydroxylverbindung mit Molekulargewicht bis 16000,
3) ionischen bzw. potentiell ionischen Hydrophilierungsmitteln und/oder nichtionischen Hydrophilierungsmitteln,
4) Blockierungsmitteln für Isocyanatgruppen und
5) gegebenenfalls niedermolekularen Mono-, Di- oder Triaminen als kettenabbrechende, kettenverlängernde bzw. kettenverzweigende Komponenten, wobei zudem
6) Polyaminvernetzer in der Dispersion enthalten sind,
wobei Komponenten 3) in solchen Mengen enthalten sind, dass eine stabile Dispersion entsteht.

Die eingesetzten koagulierbaren, nachvernetzbaren Polyurethan-Dispersionen, die in Form von wässrigen Dispersionen bzw. Emulsionen vorliegen, sind vorzugsweise Umsetzungsprodukte von
1. 9 bis 30 Gew.-% mindestens eines organischen Diisocyanats,
2. 40 bis 85 Gew.% mindestens einer mindestens difunktionellen Polyhydroxylverbindung des Molekulargewichtes 350 bis 4 000,
3. 4 bis 22 Gew.% ionischen bzw. potentiell ionischen Hydrophilierungsmittel und/oder nichtionischen Hydrophilierungsmittel,
4. 0,5 bis 5 Gew.% Blockierungsmittel für Isocyanatgruppen und
5. 0 bis 5 Gew.% niedermolekularen Mono-, Di- oder Triaminen als kettenabbrechende, kettenverlängernde bzw. kettenverzweigende Komponenten,
   wobei zudem
6. 1 bis 6 Gew.% Polyaminvernetzer in der Dispersion enthalten sind,
wobei der Gehalt an nichtionischen Hydrophilierungsmitteln 3) 3 Gew.% beträgt.

Es werden reaktive bzw. nachvernetzbare PUR-Dispersionen eingesetzt. Aufbaukomponenten für derartige PUR-Dispersionen können sein:
1. Organische Di- und/oder Polyisocyanate, wie beispielsweise Tetramethylendiisocyanat, Hexamethylendiisocyanat (HDI), 2-Methyl-pentamethylendiisocyanat, 2,2,4-Trimethylhexamethylendiisocyanat (THDI), Dodecanmethylenddiisocyanat, 1,4-Diisocyanato-cyclohexan, 3-Isocyanatomethyl-3,3,5-trimethylcyclohexylisocyanat (Isophorondiisocyanat = IPDI), 4,4'-Diisocyanatodicyclohexylmethan (®Desmodur W), 4,4'-Diisocyanato-3,3'-dimethyldicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'- 2,4'- oder 2,2'-Diisocyanatodiphenylmethan bzw. Gemische der Isomeren, 4,4'-Diisocyanatodiphenylpro-pan-(2,2), p-Xylylen-diisocyanat und α,α,α',α'-Tetramethyl-m- oder -p-xylylen-diisocyanat (TMXDI) sowie aus diesen Verbindungen bestehende Gemische. Zwecks Modifizierung können auch geringe Mengen an Trimerisaten, Urethanen, Biureten, Allophanaten oder Uretdionen der genannten Diisocyanate mitverwendet werden. Besonders bevorzugt sind MDI, Desmodur® W, HDI und/oder IPDI.
2. Polyhydroxylverbindungen, die pro Molekül 1 bis 8, vorzugsweise 1,7 bis 3,5 Hydroxylgruppen aufweisen und ein (mittleres) Molekulargewicht von bis zu 16.000, vorzugsweise bis zu 4.000, aufweisen. Dabei kommen sowohl definierte niedermolekulare Polyhydroxylverbindungen, wie z.B. Ethylenglykol, 1,2-, 1,3-Propylenglykol, 1,4-Butadiol, 1,6-Hexadiol, Neopentylglykol, Trimethylolpropan, Glyzerin, Umsetzungsprodukt aus 1 Hydrazin + 2 Propylenglykol als auch oligmere bzw. polymere Polyhydroxylverbindungen mit Molekulargewichten von 350-10.000, vorzugsweise 840 bis 3.000 in Betracht.
   Höhermolekulare Hydroxylverbindungen umfassen die in der Polyurethanchemie an sich bekannten Hydroxypolyester, Hydroxypolyether, Hydroxypolythioether, Hydroxypolyacetale, Hydroxypolycarbonate und/oder Hydroxypolyesteramide, vorzugsweise solche mit mittleren Molekulargewichten von 350 bis 4.000, besonders bevorzugt solche mit mittleren Molekulargewichten von 840 bis 3.000. Hydroxypolycarbonate und/oder Hydroxypolyether sind besonders bevorzugt. Damit ist es möglich, besondere hydrolysestabile Koagulate herzustellen.
3.a) Ionische bzw. potentiell ionische Hydrophilierungsmittel, die über eine Säuregruppe und/oder in Salzform vorliegende Säuregruppe sowie über mindestens eine isocyanatreaktive Gruppe, z.B. OH- oder NH₂ -Gruppe, verfügen. Beispiele hierfür sind das Na-Salz der Ethylendiamin-β-ethyl-sulfonsäure(AAS-Salzlösung), Dimethylolpropionsäure(n) (DMPS), Dimethylolbuttersäure, Na-Sulfonatgruppen aufweisende aliphatische Diole gemäß der DE-A 2 446 440, Hydroxypivalinsäure oder Addukte aus 1 Mol Diamin, vorzugsweise Isophorondiamin, und 1 bis 2 Mol einer α,β-ungesättigten Carbonsäure, vorzugsweise Acrylsäure (siehe DE-A 19 750 186 entsprechend EP-A 0 916 647). Bevorzugt sind Carboxylat und/oder Carboxylgruppen enthaltende Hydrophilierungsmittel des letztgenannten Typs oder der Dimethylolpropionsäure.
3.b) Nichtionische Hydrophilierungsmittel in Form von mono- und/oder difunktionellen Polyethylenoxid- bzw. Polyethylenpropylenoxidalkoholen mit Molekulargewichten von 300 bis 5.000. Besonders bevorzugt sind auf n-Butanol basierende monohydroxyfunktionelle Ethylenoxid/Propylenoxidpolyether mit 35 bis 85 Gew.-% Ethylenoxideinheiten und einem Molekulargewicht von 900 bis 2.500. Bevorzugt ist ein Gehalt an mindestens 3, besonders bevorzugt mindestens 6 Gew.-% nichtionischer Hydrophilierungsmittel.
4. Blockierungsmittel für Isocyanatgruppen, wie z.B. Oxime (Aceton-, Butanonoder Cyclohexanonoxim), sekundäre Amine (Diisopropylamin, Dicyclohexylamin), NH-acide Heterocyclen (3,5-Dimethylpyrazol, Imidazol, 1,2,4-Triazol), CH-acide Ester (Malonsäure-C₁-C₄-alkylester, Acetessigester) oder Lactame (ε-Caprolactam). Besonders bevorzugt sind Butanonoxim, Diisopropylamin und 1,2,4-Triazol.
5. Polyamine als eingebaute Kettenverlängerer, um dem Polymerrückgrat der nachvernetzbaren Dispersionen spezielle Eigenschaften zu verleihen. Hierunter fallen z.B. die unter 6. abgehandelten Polyamine. Ebenfalls als eingebaute Kettenverlängerer geeignet sind die unter 3a) genannten diaminofunktionellen Hydrophilierungsmittel. Besonders bevorzugt sind Ethylendiamin, IPDA und H₁₂ MDA.
6. Polyaminvernetzer für die Nachvernetzung unter Wärmeeinwirkung. Hierbei handelt es sich vorzugsweise um aliphatische oder cycloaliphatische Diamine, obwohl gegebenenfalls auch tri- oder höherfunktionelle Polyamine zur Erzielung spezieller Eigenschaften mitverwendet werden können. Prinzipiell ist es auch möglich, Polyamine mit zusätzlichen funktionellen Gruppen, z.B. OH-Gruppen, einzusetzen. Die Polyaminvernetzer, die bei normalen bis gering erhöhten Umgebungstemperaturen, z.B. 20 bis 60°C, nicht in das Polymergerüst eingebaut werden, können entweder sofort bei Herstellung der reaktiven Dispersionen oder zu einem beliebigen späteren Zeitpunkt hinzugemischt werden. Beispiele geeigneter aliphatische Polyamine sind Ethylendiamin, Propylendiamin-1,2 und -1,3, Tetramethylendiamin-1,4, Hexamethylendiamin-1,6, das Isomerengemisch von 2,2,4- und 2,4,4-Trimethylhexamethylendiamin, 2-Methyl-pentamethylendiamin und Bis-(β-aminoethyl)-amin (Diethylentriamin).

Beispiele geeigneter cycloaliphatischer Polyamine sind:

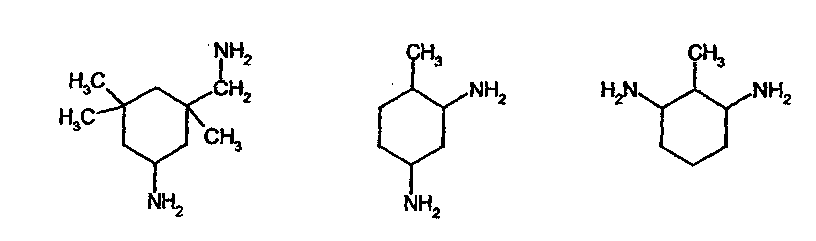

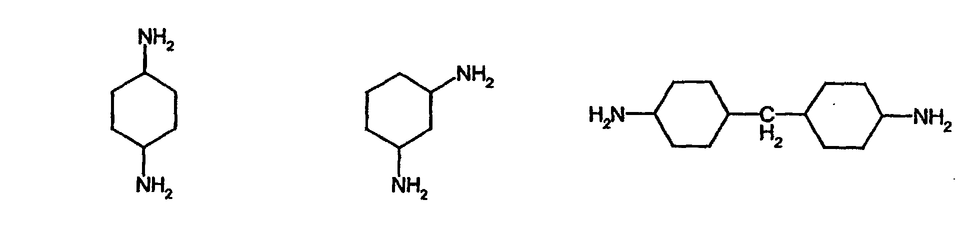

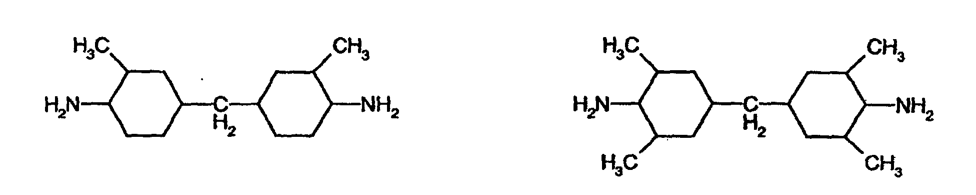

Auch araliphatische Polyamine, wie z.B. 1,2- und 1,4-Xylylendiamin oder α,α,α',α'-Tetramethyl-1,3- und -1,4-xylylendiamin lassen sich als Vernetzer einsetzen. Besonders bevorzugt sind die Diamine 3,3,5-Trimethyl-5-aminomethylcyclohexylamin (IPDA) und 4,4'-Diaminodicyclohexylmethan (H₁₂MDA).

Auch TCO-diamin und Laromin C260® können als Vernetzer eingesetzt werden.

Die oben aufgelisteten Aufbaukomponenten liegen in den reaktiven Dispersionen in folgenden Vorzugsbereichen, wobei die Addition aller 6 Komponenten 100 % Festkörper einer Dispersion ergibt, vor:

| | | |
|---|---|---|
| 1.) | Polyisocyanate | 9,0 bis 30,0 Gew.-% |
| | besonders bevorzugt | 13,0 bis 20,0 Gew.-% |
| 2.) | Polyhydroxylverbindungen | 40,0 bis 85,0 Gew.-% |
| | besonders bevorzugt | 55,0 bis 75,0 Gew.-% |
| 3.a) | ionisches Hydrophilierungsmittel | 1,0 bis 5,0 Gew.-% |
| | besonders bevorzugt | 2,5 bis 4,0 Gew.-% |
| 3.b) | nichtionisches Hydrophilierungsmittel | 3,0 bis 17,0 Gew.-% |
| | besonders bevorzugt | 6,0 bis 12,0 Gew.-% |
| 4.) | Blockierungsmittel | 0,5 bis 5,0 Gew.-% |
| | besonders bevorzugt | 1,5 bis 4,0 Gew.-% |
| 5.) | kettenverlängerndes Polyamin | 0 bis 5,0 Gew.-% |
| | besonders bevorzugt | 0 bis 1,5 Gew.-% |
| 6.) | Polyamin-Vernetzer | 1,0 bis 6,0 Gew.-%. |
| | besonders bevorzugt | 2,0 bis 4,0 Gew.-% |

Die reaktiven, nachvernetzbaren Dispersionen können nach beliebigen Verfahren, beispielsweise nach folgendem Verfahren hergestellt werden. In der üblichen Weise wird in einer ein- oder mehrstufigen Synthese ein NCO-Prepolymer bereitet, in dem ein Überschuß an Diisocyanat (1.) mit Hydroxyl-Polyethern/Polycarbonaten (2.), gegebenenfalls in Gegenwart einer Hydroxyalkylcarbonsäure, z.B. DMPS (3.a) und einem monofunktionellen Polyethylenoxidalkohol (3.b) bei 60 bis 110°C etwa 3 bis 6 Stunden in der Schmelze gerührt wird, bis der berechnete NCO-Gehalt gemessen wird. Danach verdünnt man das hochviskose NCO-Prepolymer mit Aceton, setzt beispielsweise die Hälfte der vorhandenen NCO-Gruppen bei ca. 45°C mit einem Blockierungsmittel (4.) und den Rest der NCO-Gruppen unter Kettenverlängerung mit einem Diamin, beispielsweise IPDA, oder, falls in der obigen Prepolymerstufe kein potentiell ionischer Dispergator, wie z.B. DMPS, eingebaut wurde, mit einem potentiell ionischen Dispergator, z.B. dem Addukt aus 1 Mol IPDA und 1 Mol Acrylsäure, um. Sobald in dieser acetonischen Lösung keine NCO-Gruppen mehr nachweisbar sind, setzt man den Polyaminvernetzer (6.) hinzu. Die Menge des Polyaminvernetzers korrespondiert in Bezug auf sein NH₂-Äquivalent mit den blockierten NCO-Äquivalenten. Im geschilderten Fall übernimmt der Polyaminvernetzer auch die Rolle des salzbildenden Kations mit der eingebauten Carbonsäure (3.a) und verleiht zusammen mit der Aufbaukomponente (3.b) dem beschriebenen Polyurethan die benötigte Hydrophilie. Man kann jetzt in die acetonische Lösung Wasser einrühren. Es entsteht dabei eine blauschimmernde Dispersion. Nach dem Abziehen des Acetons bei 45°C und Vakuum erhält man die anwendungsfertige reaktive Dispersion.

Bei gleichzeitiger Verwendung des Vernetzungsmittels (6.) als Neutralisationsmittel für ionische Gruppen aus Verbindungen (3.a) werden besonders hochwertige Koagulate bzw. besonders gut koagulierbare Dispersionen erhalten. Diese Vorgehensweise ist daher bevorzugt.

Eine weitere Ausführungsform besteht darin, dass nach dem beschriebenen Verfahren eine Dispersion hergestellt wird und der Polyaminvernetzer erst vor Verarbeitung der Dispersion zugesetzt wird.

Im oben erläuterten Verfahren wird die Herstellung der reaktiven Dispersionen nach dem Acetonverfahren, das im allgemeinen zu reproduzierbar guter Produktqualität führt, beschrieben. Anstelle von Aceton kann man aber auch ein anderes Lösemittel, z.B. N-Methylpyrrolidion, verwenden. Eine Übersicht über PUR-Dispersionen und deren Verfahren kann bei "Rosthauser und Nachtkamp, Waterborne Polyurethanes, Advances in Urethane Science and Technology, vol. 10, pp. 121-162 (1987)" nachgelesen werden. Die erfindungsgemäßen Produkte können prinzipiell auch ohne Verwendung organischer Lösemittel hergestellt werden.

Überraschenderweise wurde gefunden, dass durch Auswahl geeigneter Rohstoffe auch reaktive, nachvernetzbare Polyurethandispersionen mit sehr guter Wasserdampfdurchlässigkeit hergestellt werden können.

In diesem Fall werden z.B. als Komponente 2) des Polyurethans hydrophile Polyethylenoxiddiole bzw. -triole, bzw. hydrophile Polyethylenoxid/Polypropylenoxiddiole bzw. -triole und/oder hydrophile Polyesterdiole bzw. -triole auf Basis von Dicarbonsäuren und z.B. Tetraethylenglykol eingesetzt. Hydrophile Polyole 2) können dabei sowohl als alleinige Polyole 2), oder zusammen mit hydrophoben Polyolen 2) eingesetzt werden.

In einer bevorzugten Ausführungsform sind solch hydrophile Komponenten (2.) zusammen mit der Hydrophilierungskomponente (3.a) und/oder (3.b) im koagulierbaren Polyurethan enthalten.

Der Feststoffgehalt der erfindungsgemäß einzusetzenden Dispersionen kann zwischen 5 bis 60 % liegen, die Viskosität von etwa 0,01 bis 100 Pa.s. Die Viskosität kann durch Verdickungsmittel wie beispielsweise Mirox®AM, Walocel® MT 6000 PV, Rheolate® 255, Collacral® VL o.a., die Konzentration ggf. durch Verdünnen mit Wasser den jeweiligen Anforderungen an die Dispersionen, an die Verarbeitungsbedingungen sowie an die gewünschten Eigenschaften des Endproduktes angepaßt werden.

Die erfindungsgemäß verwendeten reaktiven, nachvernetzbaren Polyurethandispersionen können je nach Anwendungsweise der Endprodukte weiter modifiziert werden. So können beispielsweise Farbstoffe, Pigmente und/oder Ruß, Ultraviolett-Filtersubstanzen, Oxidationsstabilisatoren, Griffmittel u.a. zum Einsatz kommen.

Auch andere Dispersionen, wie z.B. Polyurethandispersionen nach dem Stand der Technik, Polyacrylat-, Polyacrylnitril-, Polyester-, Polyepoxid-, Polybutadien-, Polystyrol-Dispersionen u.a., können zur Erzielung besonderer Eigenschaften mit bis zu 50 %, vorzugsweise bis zu 25 %, mitverwendet werden.

Die erfindungsgemäß erhaltenen Koagulate können direkt in/aus der Umsetzungslösung in situ zu Flächengebilden verarbeitet werden.

Ein weiterer Gegenstand der Erfindung sind daher Flächengebilde hergestellt aus den erfindungsgemäß erhaltenen Koagulaten.

Die erfindungsgemäß erhaltenen Flächengebilde können auch nachträglich nach bekannten Methoden gefärbt werden.

Die Charakterisierung der erfindungsgemäß zu verwendenden Dispersionen erfolgt durch Bestimmung des Gehaltes an nicht flüchtigen Substanzen, der Viskosität und durch Bestimmung der Spannungs- und Dehnungseigenschaften von gezogenen Filmstreifen.

Die Applikation der erfindungsgemäß zu verwendenden reaktiven, nachvernetzbaren Dispersionen kann z.B. durch Gießen, Sprühen, Tauchen, Spritzen, Pflatschen, mit Rakel oder Walze oder im Foulard erfolgen, wobei die Dispersionen flüssig oder geschäumt zur Anwendung kommen können.

Im Allgemeinen wird nach dem Auftragen nach einer der genannten Methoden durch Tauchen in 50°C bis 120°C, vorzugsweise 75°C bis 98°C, heißes Wasser, mit heißem Wasserdampf, bei speziellen Anwendungen durch Füllen von formgebenden Teilen mit heißem Wasser, durch Erhitzen der Formteile auf 120°C bis 130°C oder in einem Ofen mittels Strahlen- bzw. Hochfrequenztrockner koaguliert und anschließend bei 60°C bis 180°C, vorzugsweise 100°C bis 160°C getrocknet und kondensiert.

Als Trägermaterialien eignen sich textile Flächengebilde, Flächensubstrate aus Metall, Glas, Keramik, Leder und Kunststoffen wie PVC, Polyolefine, Polyurethan oder ähnliches.

Unter textilen Flächengebilden im Sinne der vorliegenden Erfindung sind beispielsweise Gewebe, Gewirke, gebundene und ungebundene Vliese zu verstehen. Die textilen Flächengebilde können aus synthetischen, natürlichen Fasern und/oder deren Mischungen aufgebaut sein. Grundsätzlich sind Textilien aus beliebigen Fasern für das erfindungsgemäße Verfahren geeignet.

Besondere Effekte des erfindungsgemäßen Verfahrens sind das Lackieren von Trägermaterialien, das Beschichten von Substraten, die Folienherstellung flächig und geformt, wie z.B. bei Handschuhen, Schutzhüllen u.a., die Vliesverfestigung und die generelle Ausrüstung zum Zweck der Griffvariation.

Das entstehende Koagulat ist so widerstandsfähig, dass der Ausfällungsvorgang nach der Applikation im Verseifungs- und Splittingbad (3 % NaOH) bei Mikrofasern durchgeführt werden kann, wobei ein vorhandener Polyester-Anteil verseift und herausgelöst werden kann.

Dies führt zu besonders grifflich angenehmen und weichen Flächengebilden.

Die ein- oder beidseitig beschichteten oder gefüllten Flächengebilde können nachträglich angeschliffen werden und sind dann besonders weich. Auch eine mechanische Behandlung in einem Tumbler erhöht die Weichheit.

### Beispiele

### Beispiel 1 (erfindungsgemäß)

Es wird die Herstellung einer reaktiven PUR-Dispersion auf Basis von MDI als Isocyanatkomponente, Butanonoxim als Blockierungsmittel und 4,4'-Diaminodicyclohexylmethan als Polyamin-Nachvernetzer beschrieben.

| **Ansatz** | | |
|---|---|---|
| 110,0 g | (0,110 Val) | eines Polyetherpolyols der OH-Zahl 56, hergestellt durch Propoxylierung von Trimethylolpropan |
| 110,0 g | (0,110 Val) | eines Polycarbonates der OH-Zahl 56, basierend auf 1,6-Dihydroxyhexan |
| 80,0 g | (0,080 Val) | eines Polypropylenglykols der OH-Zahl 56 |
| | | |
| 49,5 g | (0,022 Val) | eines einwertigen Polyetherpolyols der OH-Zahl 25 (Dispergator), hergestellt durch Ethoxy- und Propoxylierung (in Blöcken zu ca. 50/50 %) von n-Butanol |
| 76,5 g | (0,612 Val) | 4,4'-Diisocyanatodiphenylmethan (MDI) |
| 12,18 g | (0,14 Val) | Butanonoxim |
| 60,40 g | (0,15 Val) | Dispergator (30 %ige wässrige Lösung des Adduktes von 1 Mol Acrylsäure und 1 Mol IPDA, 1 NH/NH₂-Äquivalent = 403 g, 1 COOH-Äquivalent = 806 g) |
| 14,70 g | (0,14 Val) | 4,4'-Diamino-dicyclohexylmethan (H₁₂MDA oder PACM 20) |
| 533,57 g | | Wasser |
| 1.046,85 g | | Dispersion (45 %ig) |
| | | |
| 471,00 g | | berechneter Festkörperanteil |
| 575,77 g | | Wasseranteil Viskosität bei 23°C: ca. 600 mPas |

Obiges dispergiertes Polyurethan (100 %ig) hat einen Gehalt an
- blockierten NCO-Gruppen, berechnet als NCO 42, von 1,25 Gew.-%
- NH₂-Gruppen, berechnet als NH₂/16, von 0,47 Gew.-%

### Durchführung

Die Gesamtmenge an MDI wird vorgelegt, die wasserfreien Polyole einschließlich des monofunktionellen "Polyethylenoxid-Dispergators" werden unter Rühren hinzugegossen. Die Reaktionsmischung wird auf 85°C erwärmt. Nach ca. 5 Stunden Umsetzungsdauer wird ein NCO-Gehalt von 2,7 % gemessen, berechnet sind 2,86 %. Man läßt auf ca. 6°C abkühlen, verdünnt mit 500 g Aceton und rührt bei 45°C Butanonoxim ein. Nach ca. 30 Minuten Rührzeit bei 45°C wird ein NCO-Gehalt von 0,59 % gefunden, berechnet sind 0,67 %. Man gibt die wässrige Dispergatorlösung hinzu und rührt bei 45°C ca. 1 Sunde nach, bis keine NCO-Gruppen mehr feststellbar sind. Anschließend fügt man in einem Guß H₁₂MDA hinzu und dispergiert mit Wasser, indem man unter gutem Rühren das Wasser in kurzen Intervallen in die acetonische Lösung gießt. Nach dem Abdestillieren des Acetons (45°C, 250 - 20 mbar, ca. 3-4 Stunden) erhält man eine milchigblaue Dispersion mit einer Viskosität (23°C) von ca. 600 mPas und einem Festkörper von 45 %.

### Beispiel 2 (erfindungsgemäß)

Diese reaktive Dispersion unterscheidet sich von derjenigen gemäß Beispiel 1 nur durch das Blockierungsmittel. Anstelle von Butanonoxim sind jetzt 13,44 g (0,14 Val) 3,5-Dimethylpyrazol enthalten. Die blaustichige Dispersion mit einem Festkörpergehalt von 45 % hat eine Viskosität (23°C) von ca. 4.400 mPas.

### Beispiel 3 (erfindungsgemäß)

Diese reaktive Dispersion unterscheidet sich von derjenigen gemäß Beispiel 1 nur durch das Blockierungsmittel. Anstelle von Butanonoxim sind jetzt 14,14 g (0,14 Val) Düsopropylamin enthalten. Die lagerstabile, blaustichige Dispersion mit einem Festkörpergehalt von 45 % hat eine Viskosität (23°C) von ca. 2.200 mPas.

### Beispiel 4 (erfindungsgemäß)

Es wird die Herstellung einer reaktiven PUR-Dispersion auf Basis von IPDI als Isocyanatkomponente, 1,2,4-Triazol als Blockierungsmittel und 4,4'-Diaminodicyclohexylmethan als Polyamin-Vernetzer beschrieben.

| **Ansatz** | | |
|---|---|---|
| 185,0 g | (0,185 Val) | eines Polyetherpolyols der OH-Zahl 56, hergestellt durch Propoxylierung von Trimethylolpropan |
| 230,0 g | (0,230 Val) | eines Polybutylenglykols der OH-Zahl 56 |
| 70,0 g | (0,070 Val) | eines Polyetherglykols der OH-Zahl 56, hergestellt durch Propoxy-Ethoxylierung (Blöcke von 50/50 %) von Wasser |
| 34,0 g | (0,015 Val) | eines einwertigen Polyetherpolyols der OH-Zahl 25 (Dispergator, vergl. Beispiel 1) |
| 100,0 g | (0,90 Val) | Isophorondiisocyanat (IPDI) |
| 12,07 g | (0,175 Val) | 1,2,4-Triazol |
| 60,45 g | (0,150 Val) | des potentiell ionischen Dispergators gemäß Beispiel 1 |
| 6,37 g | (0,075 Val) | Isophorondiamin (IPDA) |
| 18,40 g | (0,175 Val) | 4,4'-Diamino-dicyclohexylamin (H₁₂MDA bzw. PACM 20) |
| 968,68 g | | Wasser, entmineralisiert |
| 1.684,97 g | | Dispersion (40 %ig) |
| | | |
| 673,97 g | | berechneter Festkörperanteil |
| 1.011,00 g | | Wasseranteil Viskosität (23°C): ca. 1.000 mPas |

Obiges dispergiertes Polyurethan (100 %) hat einen Gehalt an
- blockierten NCO-Gruppen, berechnet als NCO/42, von 1,09 Gew.-%
- NH₂-Gruppen, berechnet als NH₂/16, von 0,41 Gew.-%

### Durchführung

IPDI wird zusammen mit den entwässerten Hydroxylverbindungen bei 105°C für ca. 5 Stunden umgesetzt, bis der NCO-Gehalt auf 2,67 % abgesunken ist, berechnet sind 2,7 %. Danach fügt man die weißen Schuppen von Triazol hinzu und rührt ca. 1 Stunde bei 100°C. Man findet einen NCO-Gehalt von 1,4 %, berechnet sind 1,49 %. Daraufhin wird mit 500 g Aceton verdünnt und bei ca. 45 % mit der wässrigen Dispergatorlösung sowie 15 Minuten später mit IPDA versetzt. Man rührt 30 Minuten bei 45°C nach und kann keine NCO-Gruppen (IR-Spektrum) mehr nachweisen. Jetzt kann man den Polyamin-Vernetzer PACM 20 einrühren und 10 Minuten danach unter Wasserzugabe dispergieren. Nach dem Abdestillieren des Acetons (45°C, 250-20 mbar, ca. 3-4 Stunden) erhält man eine lagerstabile (50°C), milchigblaue Dispersion mit einer Viskosität (23°C) von ca. 1.000 mPas und einem Festkörpergehalt von 40 %.

### Beispiel 5 (erfindungsgemäß)

Es wird die Herstellung einer reaktiven PUR-Dispersion, deren Beschichtungen wasserdampfdurchlässig sind, beschrieben. Der Aufbau unterscheidet sich nur unwesentlich von dem in Beispiel 1 beschriebenen. Die Änderung betrifft die Zusammensetzung der drei Polyolkomponenten wie folgt. Alle anderen Komponenten entsprechen nach Menge und Art den in Beispiel 1 genannten.

| | | |
|---|---|---|
| 100,0 g | (0,100 Val) | eines Polyetherpolyols der OH-Zahl 56, hergestellt durch Propoxylierung von Trimethylolpropan |
| 100,0 g | (0,100 Val) | eines Polycarbonates der OH-Zahl 56, basierend auf 1,6-Dihydroxyhexan |
| 100,0 g | (0,100 Val) | eines Polypmpylen/Ethylenglykols (Polyethylenglykolanteil ca. 50 %) der OH-Zahl 56 |

Die blaustichige Dispersion, fast eine Lösung, mit einem Festkörpergehalt von 35 % hat eine Viskosität (23°C) von ca. 2.000 mPas.

### Anwendungsbeispiel 1

### Vliesverfestigung

Ein unvorbehandeltes, nicht geschlichtetes Vlies auf Basis Polyamid- und Polyester-Fasern wird mit einer mit Wasser auf 10 % Feststoffgehalt verdünnten Dispersion gemäß Beispiel 1 fouladiert und in einem 95°C heißem Wasserbad in breitem Zustand behandelt, wobei das Polyurethan koaguliert. Danach wird das Vlies abgequetscht und bei 120°C getrocknet. Zur Filmbildung wird anschließend bei 150-160°C kondensiert. Bei ausreichender Trocknerleistung können beide Vorgänge in einem Durchgang durchgeführt werden. Das anfängliche Gel verfestigt sich bei der Hitzebehandlung zu einem trockenen, widerstansfähigen Film. Das Koagulat widersteht der Oberflächenmigration des Wassers während der Trocknung und wandert nicht zur Oberfläche.

Durch eine weitere mechanische Behandlung wie Tumbeln, Schleifen, Rauhen oder durch Zusätze von Ausrüstungsmitteln lassen sich eine Vielzahl von Griffvariationen erreichen. Durch Spalten des Vlieses ähnlich der Lederherstellung läßt sich der Durchmesser des Vlieses einfach regulieren.

### Anwendungsbeispiel 2

### Vliesverfestigung mit anschließendem Splitten

Ein entschlichtetes Vlies auf Basis Polyamid- und Polyester-Fasern wird mit einer mit Wasser auf 10 % Feststoffgehalt verdünnten, nach Beispiel 2 hergestellten Dispersion fouladiert und in einem Bad mit 3 %iger Natronlauge bei 95-100°C koaguliert. Gleichzeitig wird die im Vlies enthaltene Polyesterfaser teilweise verseift und herausgelöst. Die Behandlungsdauer beträgt 45 Minuten. Anschließend wird das Vlies mit Wasser gut ausgewaschen, abgequetscht und bei 120°C getrocknet. Anschließend wird bei 160°C kondensiert. Danach wird jede Seite ein- bis zweimal geschliffen.

Man erhält ein besonders grifflich angenehmes , weiches textiles Flächengebilde.

### Anwendungsbeispiel 3

### Lackieren von Metall- und/oder Glasflaschen

Die Metall- oder Glaskörper werden direkt oder indirekt mittels Heizflüssigkeit auf 90-110°C erhitzt und in eine auf 20 % verdünnte Dispersion, hergestellt nach Beispiel 3 getaucht. Die Filmdicke läßt sich mittels Tauchzeit und der Konzentration der PUR-Dispersion leicht steuern.

Anschließend wird das entstandene Gel berührungsfrei bei 60 - 80°C getrocknet und anschließend bei 160°C kondensiert.

Durch Zusatz von wässrigen Pigmentpräparationen lassen sich eine Reihe von interessanten Farbnuancen erstellen.

Die Beschichtungen zeichnen sich durch sehr gute Haftwerte aus.

### Anwendungsbeispiel 4

### Beschichten von Stoffhandschuhen als Arbeitshandschuhe

Der Stoffrohling wird über die Handschuhform gezogen und mit dieser in die nach Beispiel 5 hergestellte und auf ca. 2.000 - 3.000 mPa.s mit einem handelsüblichen Verdicker eingestellte Dispersion getaucht. Die Verdickung der Dispersion verhindert ein Durchschlagen beim Tauchen.

Nach dem Tauchen wird der außen getränkte Handschuh auf der Form 10 sec. in 60 - 95°C heißes Wasser eingetaucht, dann bei 120°C getrocknet und bei 160°C kondensiert.

Je nach Bedarf können die nachvernetzbaren Dispersionen mit Pigmentpräparationen zur Herstellung von farbigen Handschuhen versetzt werden.

### Anwendungsbeispiel 5

### Trägerlose Handschuhe bzw. Schutzhüllen

Eine auf 80 - 120°C erwärmte Form wird in die auf 25 % Feststoffgehalt verdünnte Dispersion nach Beispiel 4 eingetaucht.

Je nach gewünschter Filmdicke beträgt die Verweilzeit 5- 20 Sekunden.

Danach wird das Gel auf der Form bei 80 - 100°C getrocknet und danach bei 160°C kondensiert.

Es entsteht ein porenfreier Film mit sehr guter Dehnbarkeit und Festigkeit.

## Patentansprüche

1. Koagulate nachvernetzbarer Polyurethan-Dispersionen erhältlich durch thermische Behandlung nachvernetzbarer Polyurethan-Dispersionen bei 50 bis 120°C, die zur Ausfällung eines stabilen, mindestens teilweise vernetzten Polyurethans bzw. Gels führt.

2. Koagulate gemäß Anspruch 1, **dadurch gekennzeichnet, dass** die thermische Behandlung bei 75 bis 98°C durchgeführt wird.

3. Koagulate gemäß Anspruch 1, **dadurch gekennzeichnet, dass** die verwendeten Polyurethan-Dispersionen
a) einen Gehalt an blockierten Isocyanatgruppen (berechnet als NCO = 42) von 0,1 bis 7,5 Gew.% aufweisen und
b) einen Gehalt an mindestens einem Polyamin und/oder Hydroxyamin mit mindestens zwei (cyclo)aliphatisch gebundenen primäre und/oder sekundäre Aminogruppen aufweisen, wobei das Äquivalentverhältnis blockierter Isocyanatgruppen aus a) zu Aminogruppen aus b) 1 : 0,5 bis 1 : 1,5 beträgt.

4. Koagulate gemäß Anspruch 2, **dadurch gekennzeichnet, dass** die verwendeten Polyurethan-Dispersionen
a) einen Gehalt an blockierten Isocyanatgruppen (berechnet als NCO = 42) von 0,25 bis 5 Gew.% aufweisen und
b) einen Gehalt an mindestens einem Polyamin und/oder Hydroxyamin mit mindestens zwei (cyclo)aliphatisch gebundenen primären und/oder sekundären Aminogruppen aufweisen, wobei das Äquivalentverhältnis blockierter Isocyanatgruppen aus a) zu Aminogruppen aus b) 1 : 0,7 bis 1 : 1,2 beträgt

5. Koagulate gemäß Anspruch 2, **dadurch gekennzeichnet, dass** die verwendeten Polyurethan-Dispersionen
a) einen Gehalt an blockierten Isocyanatgruppen (berechnet als NCO = 42) von 0,7 bis 2 Gew.% aufweisen und
b) einen Gehalt an mindestens einem Polyamin und/oder Hydroxyamin mit mindestens zwei (cyclo)aliphatisch gebundenen primären und/oder sekundären Aminogruppen aufweisen, wobei das Äquivalentverhältnis blockierter Isocyanatgruppen aus a) zu Aminogruppen aus b) 1 : 0,9 bis 1 : 1,1 beträgt.

6. Koagulate gemäß Ansprüchen 1 bis 5, **dadurch gekennzeichnet, dass** diese durch Verwendung von Dispersionen auf Basis hydrophiler Rohstoffe, insbesondere hydrophiler Polyole, wasserdampfdurchlässig sind.

7. Koagulate gemäß Ansprüchen 1 bis 5, **dadurch gekennzeichnet, dass** sie aus wässrigen Dispersionen bzw. Emulsionen von Umsetzungsprodukten von
1. mindestens einem organischen Di- bzw. Polyisocyanat,
2. mindestens einer Polyhydroxylverbindung mit Molekulargewicht bis 16000,
3. ionischen bzw. potentiell ionischen Hydrophilierungsmitteln und/oder nichtionischen Hydrophilierungsmitteln,
4. Blockierungsmitteln für Isocyanatgruppen und
5. gegebenenfalls niedermolekularen Mono-, Di- oder Triaminen als kettenabbrechende, kettenverlängernde bzw. kettenverzweigende Komponenten, wobei zudem
6. Polyaminvernetzer in der Dispersion enthalten sind,
wobei Komponenten 3) in solchen Mengen enthalten sind, dass eine stabile Dispersion entsteht
erhältlich sind.

8. Koagulate gemäß Anspruch 7, **dadurch gekennzeichnet, dass** sie aus wässrigen Dispersionen bzw. Emulsionen von Umsetzungsprodukten von
1. 9 bis 30 Gew.% mindestens eines organischen Diisocyanats,
2. 40 bis 85 Gew.% mindestens einer mindestens difunktionellen Polyhydroxylverbindung des Molekulargewichtes 350 bis 4 000,
3. 4 bis 22 Gew.% ionischen bzw. potentiell ionischen Hydrophilierungsmitteln und/oder nichtionischen Hydrophilierungsmitteln,
4. 0,5 bis 5 Gew.% Blockierungsmitteln für Isocyanatgruppen und
5. 0 bis 5 Gew.% niedermolekularen Mono-, Di- oder Triaminen als kettenabbrechende, kettenverlängernde bzw. kettenverzweigende Komponenten,
wobei zudem
6. 1 bis 6 Gew.% Polyaminvernetzer in der Dispersion enthalten sind,
wobei der Gehalt an nichtionischen Hydrophilierungsmitteln 3.) 3 Gew.% beträgt,
erhältlich sind

9. Koagulate gemäß Ansprüchen 1 bis 8, **dadurch gekennzeichnet, dass** als ionische Hydrophilierungsmittel Dimethylolpropionsäure und/oder Umsetzungsprodukte aus 1 Mol Diamin und 0,5 bis 2 Mol Acrylsäure enthalten sind.

10. Koagulate gemäß Ansprüchen 1 bis 9, **dadurch gekennzeichnet, dass** als Blockierungsmittel Butanonoxim, Diisopropylamin und/ oder Triazol enthalten sind.

11. Koagulate gemäß Ansprüchen 1 bis 10, **dadurch gekennzeichnet, dass** als Blockierungsmittel Dimethylpyrazol enthalten ist.

12. Koagulate gemäß Ansprüchen 1 bis 11, **dadurch gekennzeichnet, dass** als Vernetzer enthaltene Polyamine zusätzlich die Funktion des Neutralisationsmittels für Säuregruppen des Hydrophilierungsmittels übernehmen.

13. Koagulate gemäß Ansprüchen 1 bis 12, **dadurch gekennzeichnet, dass** als Vernetzer Isophorondiamin, TCD-diamin, PACM 20 und/oder Diethylentriamin enthalten sind.

14. Verwendung der Koagulate gemäß Ansprüchen 1 bis 13 zur Beschichtung von Oberflächen.

15. Verwendung gemäß Anspruch 14 zur Vliesverfestigung.

16. Verwendung gemäß Ansprüchen 14 und 15, **dadurch gekennzeichnet, dass** die erhaltenen Oberflächenbeschichtungen wasserdampfdurchlässig sind.

17. Verwendung gemäß Ansprüchen 14 bis 16 zur Herstellung von Flächengebilden, textilen Fächengebilden, beschichten Substraten, Folien, Handschuhen und Schutzhüllen.

## Claims

1. Coagulates of post-crosslinkable polyurethane dispersions, obtainable by thermal treatment of post-crosslinkable polyurethane dispersions at 50 to 120°C, which leads to the precipitation of a stable, at least partly crosslinked polyurethane or gel.

2. Coagulates according to claim 1, **characterised in that** the thermal treatment is performed at 75 to 98°C.

3. Coagulates according to claim 1, **characterised in that** the polyurethane dispersions used
a) have a content of blocked isocyanate groups (calculated as NCO = 42) of 0.1 to 7.5 wt.% and
b) have a content of at least one polyamine and/or hydroxyamine with at least two (cyclo)aliphatically bonded primary and/or secondary amino groups, the equivalent ratio of blocked isocyanate groups from a) to amino groups from b) being 1 : 0.5 to 1 : 1.5.

4. Coagulates according to claim 2, **characterised in that** the polyurethane dispersions used
a) have a content of blocked isocyanate groups (calculated as NCO = 42) of 0.25 to 5 wt.% and
b) have a content of at least one polyamine and/or hydroxyamine with at least two (cyclo)aliphatically bonded primary and/or secondary amino groups, the equivalent ratio of blocked isocyanate groups from a) to amino groups from b) being 1 : 0.7 to 1 : 1.2.

5. Coagulates according to claim 2, **characterised in that** the polyurethane dispersions used
a) have a content of blocked isocyanate groups (calculated as NCO = 42) of 0.7 to 2 wt.% and
b) have a content of at least one polyamine and/or hydroxyamine with at least two (cyclo)aliphatically bonded primary and/or secondary amino groups, the equivalent ratio of blocked isocyanate groups from a) to amino groups from b) being 1 : 0.9 to 1 : 1.1.

6. Coagulates according to claims 1 to 5, **characterised in that**, by using dispersions based on hydrophilic raw materials, especially hydrophilic polyols, these are water vapour permeable.

7. Coagulates according to claims 1 to 5, **characterised in that** they are obtainable from aqueous dispersions or emulsions of reaction products of
1. at least one organic di- or polyisocyanate,
2. at least one polyhydroxyl compound with a molecular weight of up to 16000,
3. ionic or potentially ionic hydrophilising agents and/or non-ionic hydrophilising agents,
4. blocking agents for isocyanate groups and
5. optionally low molecular weight mono-, di- or triamines as chain-terminating, chain-extending or chain-branching components wherein, in addition,
6. polyamine crosslinking agents are contained in the dispersion,
components 3) being contained in quantities such that a stable dispersion is formed.

8. Coagulates according to claim 7, **characterised in that** they are obtainable from aqueous dispersions or emulsions of reaction products of
1. 9 to 30 wt.% of at least one organic diisocyanate,
2. 40 to 85 wt.% of at least one at least difunctional polyhydroxyl compound with a molecular weight of 350 to 4 000,
3. 4 to 22 wt.% ionic or potentially ionic hydrophilising agents and/or non-ionic hydrophilising agents,
4. 0.5 to 5 wt.% blocking agents for isocyanate groups and
5. 0 to 5 wt.% low molecular weight mono-, di- or triamines as chain-terminating, chain-extending or chain-branching components,
wherein, in addition
6. 1 to 6 wt.% polyamine crosslinking agents are contained in the dispersion,
the content of non-ionic hydrophilising agents 3.) being 3 wt.%.

9. Coagulates according to claims 1 to 8, **characterised in that** dimethylolpropionic acid and/or reaction products of 1 mole diamine and 0.5 to 2 moles acrylic acid are contained as ionic hydrophilising agents.

10. Coagulates according to claims 1 to 9, **characterised in that** butanone oxime, diisopropylamine and/or triazole are contained as blocking agents.

11. Coagulates according to claims 1 to 10, **characterised in that** dimethylpyrazole is contained as blocking agent.

12. Coagulates according to claims 1 to 11, **characterised in that** polyamines contained as crosslinking agents additionally take on the function of neutralising agent for acid groups of the hydrophilising agent.

13. Coagulates according to claims 1 to 12, **characterised in that** isophorone diamine, TCD diamine, PACM 20 and/or diethylenetriamine are contained as crosslinking agents.

14. Use of the coagulates according to claims 1 to 13 for the coating of surfaces.

15. Use according to claim 14 for the strengthening of nonwovens.

16. Use according to claims 14 and 15, **characterised in that** the surface coatings obtained are water vapour permeable.

17. Use according to claims 14 to 16 for the production of flat materials, textile fabrics, coated substrates, films, gloves and protective coverings

## Revendications

1. Coagulats de dispersions de polyuréthanne réticulables ultérieurement, pouvant être obtenus par traitement thermique de dispersions de polyuréthanne réticulables, ultérieurement de 50 à 120°C, qui conduisent à la précipitation d'un polyuréthanne ou gel stable, au moins partiellement réticulé.

2. Coagulats suivant la revendication 1, **caractérisés en ce que** l'on réalise le traitement thermique dans l'intervalle allant de 75 à 98°C.

3. Coagulats suivant la revendication 1, **caractérisés en ce que** les dispersions de polyuréthanne utilisées présentent :
a) une teneur en radicaux isocyanate bloqués (calculés comme NCO = 42) allant de 0,1 à 7,5% en poids, et
b) une teneur en au moins une polyamine et/ou hydroxyamine avec au moins deux radicaux amino primaires et/ou secondaires liés de manière (cyclo)aliphatique, où le rapport des équivalents des radicaux isocyanate bloqués de a) aux radicaux amino de b) se situe dans l'intervalle allant de 1:0,5 à 1:1,5.

4. Coagulats suivant' la revendication 2, **caractérisés en ce que** les dispersions'de polyuréthanne utilisées présentent :
a) une teneur en radicaux isocyanate bloqués (calculés comme NCO = 42) allant de 0,25 à 5% en poids, et
b) une teneur en au moins une polyamine et/ou hydroxyamine avec au moins deux radicaux amino primaires et/ou secondaires liés de manière (cyclo)aliphatique, où le rapport des équivalents des radicaux isocyanate bloqués de a) aux radicaux amino de b) se situe dans l'intervalle allant de 1:0,7 à 1:1,2.

5. Coagulats suivant la revendication 2, **caractérisés en ce que** les dispersions de polyuréthanne utilisées présentent :
a) une teneur en radicaux isocyanate bloqués (calculés comme NCO = 42) allant de 0,7 à 2% en poids, et
b) une teneur en au moins une polyamine et/ou hydroxyamine avec au moins deux radicaux amino primaires et/ou secondaires liés de manière (cyclo)aliphatique, où le rapport des équivalents des radicaux isocyanate bloqués de a) aux radicaux amino de b) se situe dans l'intervalle allant de 1:0,9 à 1:1,1.

6. Coagulats suivant les revendications 1 à 5, **caractérisés en ce que** ceux-ci sont perméables à la vapeur d'eau par utilisation de dispersions à base de matières premières hydrophiles, en particulier de polyols hydrophiles.

7. Coagulats suivant les revendications 1 à 5, **caractérisés en ce qu'**ils sont obtenus à partir de dispersions ou d'émulsions aqueuses des produits de réaction de :
1) au moins un di- ou polyisocyanate organique ;
2) au moins un composé polyhydroxylé avec un poids moléculaire de jusqu'à 16 000 ;
3) des agents ioniques ou potentiellement ioniques d'hydrophilisation et/ou des agents non ioniques d'hydrophilisation ;
4) des agents de blocage pour les radicaux isocyanate, et
5) le cas échéant, des mono-, di- ou triamines de faible poids moléculaire comme composant d'interruption, d'allongement ou de ramification de chaine, où en outre,'
6) des agents de réticulation polyamine sont présents dans la dispersion,
où les composants 3) sont présents en des quantités telles qu'il se forme une dispersion stable.

8. Coagulats suivant la revendication 7, **caractérisés en ce qu'**ils sont obtenus à partir de dispersions ou d'émulsions aqueuses des produits de réaction de :
1) 9 à 30% en poids d'au moins un diisocyanate organique ;
2) 40 à 85% en poids d'au moins un composé polyhydroxylé bifonctionnel avec un poids moléculaire allant de 350 à 4000 ;
3) 4 à 22% en poids d'agents ioniques ou potentiellement ioniques d'hydrophilisation ;
4) 0,5 à 5% en poids d'agents de blocage pour les radicaux isocyanate, et
5) 0 à 5% en poids de mono-, di- ou triamines de faible poids moléculaire comme composant d'interruption, d'allongement ou de ramification de chaine, où en outre,
6) 1 à 6% en poids d'agents de réticulation polyamine sont présents dans la dispersion,
où la teneur en agents ioniques d'hydrophilisation 3) s'élève à 3% en poids.

9. Coagulats suivant les revendications 1 à 8, **caractérisés en ce qu'**ils contiennent comme agents ioniques d'hydrophilisation, l'acide diméthylol-propionique et/ou les produits de réaction de 1 mole de diamine et de 0,5 à 2 mole d'acide acrylique.

10. Coagulats suivant les revendications 1 à 9, **caractérisés en ce qu'**ils contiennent comme agent de blocage, la butanoneoxime, la diisopropylamine et/ou un triazole.

11. Coagulats suivant les revendications 1 à 10, **caractérisés en ce qu'**ils contiennent comme agent de blocage, le diméthylpyrazole.

12. Coagulats suivant les revendications 1 à 11, **caractérisés en ce** les polyamines présentes comme agent de réticulation ont en outre, la fonction d'agent de neutralisation des radicaux acide de l'agent d'hydrophilisation.

13. Coagulats suivant les revendications 1 à 12, **caractérisés en ce qu'**ils contiennent comme agent de réticulation, l'isophoronediamine, la TCD-diamine, le PACM 20 et/ou la diéthylènetriamine.

14. Utilisation des coagulats suivant les revendications 1 à 13, pour le revêtement de surfaces.

15. Utilisation suivant la revendication 14, pour le renforcement de nappes.

16. Utilisation suivant les revendications 14 et 15, **caractérisée en ce que** les revêtements de surface obtenus sont perméables à la vapeur d'eau.

17. Utilisation suivant les revendications 14 à 16, pour la préparation de produits surfaciques, de produits surfaciques textiles, de substrats revêtus, de feuilles, de gants et d'enveloppes protectrices.
